Europäisches Patentamt

European Patent Office

Office européen des brevets

(19)

(11) Veröffentlichungsnummer: **0 252 245**
**B1**

# (12) EUROPÄISCHE PATENTSCHRIFT

(45) Veröffentlichungstag der Patentschrift:
04.07.90

(21) Anmeldenummer: **87106894.6**

(22) Anmeldetag: **12.05.87**

(51) Int. Cl.⁵: **A22C 25/18**

(54) **Einrichtung zum Teilen von Fischfilets.**

(30) Priorität: **09.07.86 DE 3623002**

(43) Veröffentlichungstag der Anmeldung:
**13.01.88 Patentblatt 88/2**

(45) Bekanntmachung des Hinweises auf die Patenterteilung:
**04.07.90 Patentblatt 90/27**

(84) Benannte Vertragsstaaten:
**BE DE ES FR GB IT NL SE**

(56) Entgegenhaltungen:
**DE-A- 2 460 447**
**DE-A- 2 747 386**
**US-A- 2 288 010**
**US-A- 3 800 363**
**US-A- 4 557 019**

(73) Patentinhaber: **NORDISCHER MASCHINENBAU RUD. BAADER GMBH + CO KG, Geniner Strasse 249, D-2400 Lübeck(DE)**

(72) Erfinder: **Braeger, Horst, Auf dem Ruhm 14, D-2400 Lübeck(DE)**

## Beschreibung

Die Erfindung betrifft eine Einrichtung zum automatischen Teilen von Fischfilets, von welchen vorzugsweise die Gräten und/oder Bauchlappen entfernt sind, zum Zwecke der Gewinnung von durch im wesentlichen parallele Schnittkanten begrenzten Nutzstücken, wie beispielsweise den Schwanzteil oder einen Teil desselben umfassende, sogenannte "Tails", sowie sich von dem vorderen Ende bis zu dem Schwanzteil erstreckende, den Rückenmuskel umfassende, sogenannte "Loins", wobei die Einrichtung im wesentlichen aufweist, eine die Filets flachliegend und im wesentlichen quer zu ihrer Längsachse fördernde, umlaufend angetriebene Fördereinrichtung, eine oberhalb von deren Förderfläche angeordnete Schneid -einrichtung und ein elektronisches Kamerasystem zur Erfassung eines Bildes des Filets und zur bildabhängigen Steuerung der Schneideinrichtung.

Aus der US-A 4 557 019 ist eine Einrichtung zum automatischen Teilen von Fischfilets in Teilportionen bekannt, bei welcher die Fischfilets auf einem Förderband mit ihrer Längsachse in Förderrichtung desselben ausgerichtet aufgebracht und die Teilungsschnitte quer zu ihrer Förderrichtung geführt werden. Die Steuerung der Schneideinrichtung erfolgt durch ein elektronisches Bilderfassungssystem, welches die Gestalt des zu teilenden Fischfilets erfaßt, durch Rechnung eine Gewichtsermittlung durchführt und daraus die Schneideinrichtung unter Berücksichtigung der Fortschrittsgeschwindigkeit der Filets und der gewünschten Portionen aktiviert.

Bei dieser Einrichtung ist nachteilig, daß ihre Integration in eine automatische Filetierlinie heute üblicher Durchsatzleistung aufgrund der systembedingt erzielbaren, vergleichsweise niedrigen Arbeitsgeschwindigkeit nicht möglich ist. Darüberhinaus ist mit der bekannten Einrichtung eine vollständige Trennung der Filetportionen nicht sicher durchführbar, da dafür unumgänglich ist, daß das Trennmesser in die Auflagefläche unter Nutzung derselben als Schnittgegenlage eintaucht.

Aus der NO-PS 78 432 ist weiter eine Schneideinrichtung für die Herstellung von "Gabelbissen" aus Fischfilets bekannt. Bei dieser Einrichtung finden dünne, nebeneinander angebrachte Messerblätter Verwendung, welche im Rhythmus der in Querlage auf dem Förderer aufgelegten und von diesem herangeführten Fischfilets auf diese absenkbar ausgebildet sind und eine Teilung durch ziehende Schritte bewirken. Die Teilung erfolgt dabei in festgelegtem Abstand, d. h. unter Erzeugung von Stücken einheitlicher Länge und unter nicht beeinflußbarer Wirksamkeit aller Messerblätter.

Es ist daher die Aufgabe der Erfindung, eine in eine moderne Filetierlinie intregierbare Einrichtung vorzuschlagen, mit deren Hilfe eine Teilung von in dichter Folge hintereinander zugeführten, hinsichtlich ihrer Größe unsortierten Fischfilets entsprechend vorgebbarer, beispielsweise gestaltabhängiger Kriterien, durchführ -bar ist.

Diese Aufgabe wird erfindungsgemäß dadurch gelöst, daß die Schneideinrichtung Schneidorgane in Form von mit ihren Schnittebenen parallel zu der Fortschrittbewegung der Fördereinrichtung ausgerichteten Kreismessern aufweist, welche wenigstens zum Teil in Abhängigkeit von der Größe der Fischfilets und/oder markanten optischen Merkmalen sowohl hinsichtlich ihrer Wirkstellung in Schnittstellung oder Ruhestellung steuerbar sind, wie auch hinsichtlich der Schneidposition senkrecht zur Fortschrittbewegung der Fördereinrichtung steuerbar sind, wobei die Kreismesser der steuerbaren Schneidorgane dadurch gekennzeichnet sind, daß ihre Umfangsschneide beispielsweise durch Entfernen eines Scheibenabschnittes des Kreismessers derweise unterbrochen ist, daß in Ruhestellung die Bogenhöhe des Scheibenabschnittes wenigstens dem größten Dickenmaß des größten zur Verarbeitung kommenden Fischfilets entspricht. Es können daher sämtliche Schneidorgane um eine gemeinsame Achse umlaufen, wobei die individuelle Steuerbarkeit dadurch erreicht werden kann, daß mindestens ein Teil der steuerbaren Schneidorgane mit einem Drehtrieb zur Beeinflussung der Wirkstellung der Kreismesser und mit einem Stelltrieb für die Einstellung der Schneidposition derselben versehen sind. Vorteilhafterweise kann sowohl jeder Stelltrieb als auch jeder Drehtrieb als Schrittmotor ausgebildet sein, womit es möglich ist, die Steuerung der Schneidorgane aus einer Fischfilet-Bilderfassung herzuleiten. Dabei kann die Einstellung der Schneidposition der Schneidorgane über die Gesamtlänge des jeweiligen Fischfilets als Einstellparameter erfolgen, wobei die Filets vorzugsweise unter einheitlicher Ausrichtung ihres Schwanzendes gefördert werden. Wahlweise kann aber auch die Einstellung der Schneidposition zumindest des den "Loin"-Schnitt durchführenden Schneidorgans sich an dem Ende des Schnittes orientieren, mit welchem die Pinbones und/oder die Bauchlappen entfernt wurden. Um eine vollständige Trennung der Filetteile sicherzustellen, kann die Förderfläche der Fördereinrichtung mit Längsnuten versehen sein, in welche die Umfangsschneiden der Kreismesser eintauchen, wobei die Einstellung der Schneidposition der Schneidorgane unter Berücksichtigung der Lage der Längsnuten in der Förderfläche der Fördereinrichtung erfogt.

Die Erfindung wird nachfolgend anhand der Zeichnung näher erläutert. Es zeigt

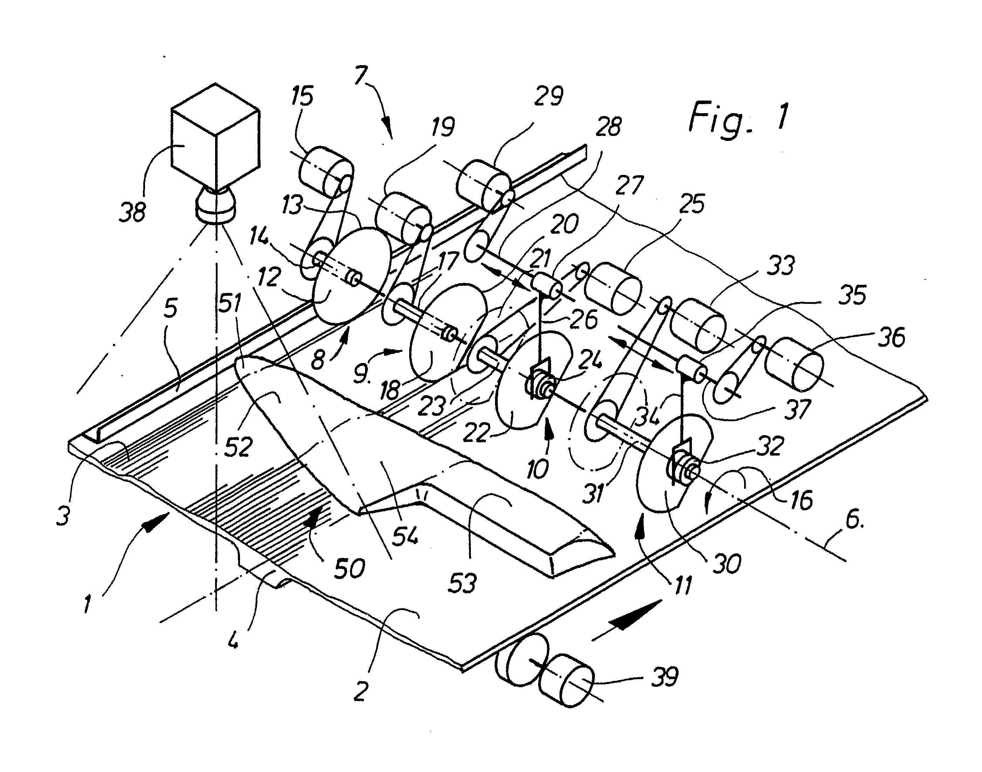

Fig. 1 eine Gesamtansicht der Schneideinrichtung in vereinfachter und axonometrischer Darstellung,

Fig. 2 einen Teilquerschnitt durch die Einrichtung mit einem in Ruhestellung befindlichen Kreismesser,

Fig. 3 einen Teilquerschnitt entsprechend Fig. 2 mit einem in Schnittbereitschaft befindlichen Kreismesser,

Fig. 4 ein Blockschaltbild der für die Steuerung der Antriebe der Schneidorgane geeigneten Schaltung.

In einem nicht näher dargestellten Gestell ist eine Fördereinrichtung 1 vorgesehen, bestehend aus einem auf geeignete Weise kontinuierlich angetriebenen, endlos umlaufenden Fördergurt, dessen Förderfläche 2 in ihrer gesamten Breitenausdehnung mit feinen, parallel zu der Förderrichtung verlaufenden Längsnuten 3 versehen ist und dessen Unterfläche mindestens ein Keilprofil 4 zur sicheren Spurhaltung aufweist. Die Förderfläche 2 ist in der Nähe einer Seitenkante mittels einer Anschlagschiene 5 begrenzt. Oberhalb der Förderfläche 2 ist eine vorzugsweise gestellfeste, zu deren Förderebene parallel und Förderrichtung senkrecht ausgerichtete Achse 6 angeordnet. Die Achse 6 trägt eine Schneideinrichtung 7 , welche aus einer Reihe von Schneidorganen 8 bis 11 besteht, die über die Breitenausdehnung der Förderfläche 2 verteilt angeordnet sind. Dabei befindet sich ein erstes Schneidorgan 8 in der Nähe der Anschlagschiene 5 und besteht aus einem Kreismesser 12, welches auf einer gegen axiale Verschiebung gesicherten Laufhülse 14 befestigt und auf geeignete Weise mittels eines herkömmlichen Motors 15 in Richtung des Pfeiles 16 drehend angetrieben ist, und dessen Umfangsschneide 13 in eine der Längsnuten 3 in der Förderfläche 2 eintaucht. Dem Schneidorgan 8 schließt sich ein zweites Schneidorgan 9 mit einem Kreismesser 18 an, welches auf einer unabhängig angetriebenen, gegen axiale Verschiebung gesicherten Laufhülse 17 befestigt ist. Den Antrieb derselben besorgt ein vorzugsweise als Schrittmotor ausgebildeter Drehtrieb 19 . Das Kreismesser 18 weist eine Umfangsschneide 20 auf, welche durch Entfernen eines Teils der Kreisscheibe inform eines Scheibenabschnittes 21 auf einem Teil ihres Umfanges unterbrochen ist. Dem zweiten Schneidorgan 9 schließt sich weiter ein drittes Schneidorgan 10 mit einem dem Kreismesser 18 entsprechend ausgebildeten Kreismesser 22 an. Dieses ist auf einer Mehrkeil-Schiebehülse 24 befestigt, die ihrerseits auf einer axial fixierten Laufhülse 23 verschiebbar gelagert ist, welche mittels eines Drehtriebes 25 inform eines Schrittmotors angetrieben ist. In die Schiebehülse 24 greift ein gabelartiges Stellelement 26 , welches mit einer Mutter 27 verbunden ist, die durch eine parallel zu der Achse 6 angeordnete, auf geeignete Weise mittels eines Stelltriebes 29 inform eines Schrittmotors angetriebene Gewindespindel 28 aufgenommen ist. Dem Schneidorgan 10 benachbart ist ein viertes, diesem gleichartiges Schneidorgan 11 auf der Achse 6 angeordnet, wobei dem Kreismesser die Pos. 30 , der Mehrkeil-Schiebehülse die Pos. 32 , der Laufhülse die Pos. 31 , dem Drehtrieb die Pos. 33 , dem Stellelement die Pos. 34 , der Mutter die Pos. 35, dem Stelltrieb die Pos. 36 und der Gewindespindel die Pos. 37 zugeordnet sind. Die Anordnung auch der Kreismesser 18, 22 und 30 ist so getroffen, daß ihre Umfangsschneiden jeweils in Längsnuten 3 in der Förderfläche 2 eintauchen. Die Einrichtung ist weiter ausgestattet mit einer die mittels geeigneter, nicht gezeigter Beleuchtungsmittel ausgeleuchtete Förderfläche 2 überwachenden Videokamera 38 , welche wie ein mit der Förderfläche 2 synchron mitlaufender Inkremental-Winkelgeber 39 Bestandteil einer Steuerschaltung sind, deren Blockschaltbild nachfolgend beschrieben wird:

Die Steuerschaltung weist einen zentralen Rechner 40 auf , in den die Signale der Videokamera 38 über eine Kontrolleinheit 41 eingegeben werden. Eine Synchronisation mit der Geschwindigkeit der Förderfläche 2 erfolgt über einen mit dieser umlaufenden InkrementalWinkelgeber 39 . Weiter gehen in die Funktion des Rechner 40 Überwachungssignale ein, die ein den Ausleuchtgrad des Blickfeldes der Videokamera 38 kontrollierendes Überwachungselement 42 liefert. Aus den von dem Rechner 40 entsprechend einem vorgegebenen Programm aufbereiteten Signalen werden die Steuersignale für die Antriebe der Schneidorgane 9, 10 und 11 erzeugt, deren Positionen durch Positionskontrollelemente 43 bis 47 überwacht werden. Die Arbeitsweise der erfindungsgemäßen Schneideinrichtung ist folgende:

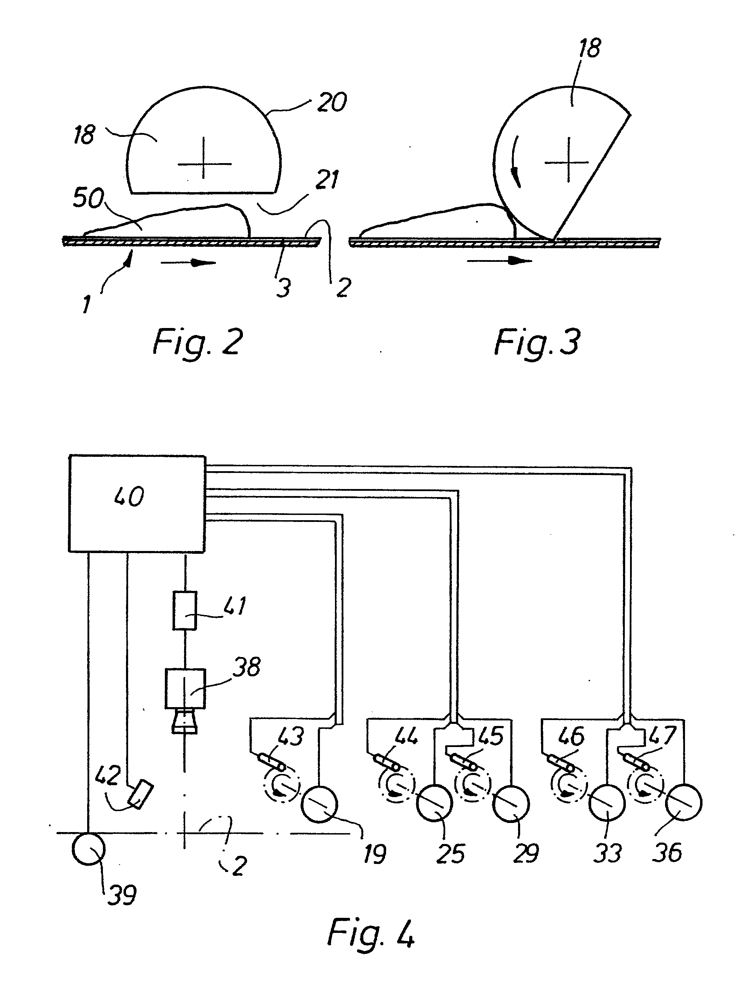

Ein zu teilendes Fischfilet 50 wird beispielsweise manuell auf die Förderfläche 2 der Fördereinrichtung 1 aufgebracht in der Weise, daß es mit seinem Schwanzende 51 an der Anschlagschiene 5 anliegt und mit seiner Längsachse im wesentlichen senkrecht zur Förderrichtung der Förderfläche 2 zu liegen kommt. Das Fischfilet 50 gelangt so zunächst in das Blickfeld der Videokamera 38 , welche ein Bild des Filets 50 in den Rechner 40 übermittelt, der eine Auswertung des Bildes nach Abmessung und/oder markanten Merkmalen vornimmt. Vor Eintritt des Fischfilets 50 in den Arbeitsbereich der Schneideinrichtung 1 werden die an Durchlaßstellung gemäß Fig. 2 befindlichen Messer 22 und 30 mittels der Stelltriebe 29 bzw. 36 in die entsprechend einem vorwählbaren Schneidprogramm ermittelte Schneidposition gebracht, Sodann werden nach diesem Programm die Messer 22 und 30 sowie das axial stationäre, ebenfalls in Durchlaßstellung befindliche Messer 18 in Anschnittstellung gedreht oder in Durchlaßstellung (sh. Fig. 2) belassen. Bei Eintritt des Filets 50 in den Arbeitsbereich der Schneideinrichtung 1 werden die in Schnittstellung befindlichen Messer aktiviert, so daß eine der Vorgabe des gewählten Programmes entsprechende Teilung des Filets 50 in ein Schwanzstück 52 ("Tail") , ein den Rückenmuskel 54 umfassendes Stück ("Loin") und eine Mittelstück 53 ("Center piece") erfolgt. Nach Austritt des Filets aus dem Arbeitsbereich der Schneideinrichtung 1 werden die Messer in die Durchlaßstellung gemäß Fig. 2 gedreht und in ihre Grundposition gebracht, so daß ein neuer Zyklus beginnen kann. Das Kreismesser 12 läuft von diesem Zyklus unabhängig dauernd um.

## Patentansprüche

1. Einrichtung zum automatischen Teilen von Fischfilets (50), von welchen vorzugsweise die Gräten und/oder Bauchlappen entfernt sind, zum Zwecke der Gewinnung von durch im wesentlichen parallele Schnittkanten begrenzten Nutztstücken, wie beispielsweise den Schwanzteil oder einen Teil desselben umfassende, sogenannte "Tails", sowie sich von dem vorderen Ende bis zu dem Schwanzteil erstreckende, den Rückenmuskel umfassende, sogenannte "Loins", wobei die Einrichtung aufweist, eine die Fischfilets (50) flachliegend und im wesentlichen quer zu ihrer Längsachse fördernde, umlaufend angetriebene Fördereinrichtung (1), eine oberhalb von deren Förderfläche angeordnete Schneideinrichtung (7) und ein elektronisches Kamerasystem zur Erfassung eines Bildes des Fischfilets (50) und zur bildabhängigen Steuerung der Schneideinrichtung (7), dadurch gekennzeichnet, daß die Schneideinrichtung (7) Schneidorgane (8 bis 11) in Form von mit ihren Schnittebenen parallel zu der Fortschrittbewegung der Fördereinrichtung (1) ausgerichteten Kreismessern aufweist, welche wenigstens zum Teil in Abhängigkeit von der Größe der Fischfilets (50) und/oder markanten optischen Merkmalen sowohl hinsichtlich ihrer Wirkstellung in Schnittstellung oder Ruhestellung steuerbar sind, wie auch hinsichtlich der Schneidposition, senkrecht zur Fortschrittsbewegung der Fördereinrichtung steuerbar sind, wobei die Kreismesser (18, 22, 30) der steuerbaren Schneidorgane (9 bis 11). Die Arbeitsweise der erfindungsgemäßen Schneideinrichtung ist folgende:

Ein zu teilendes Fischfilet 50 wird beispielsweise manuell auf die Förderfläche 2 der Fördereinrichtung 1 aufgebracht in der Weise, daß es mit seinem Schwanzende 51 an der Anschlagschiene 5 anliegt und mit seiner Längsachse im wesentlichen senkrecht zu der Förderrichtung der Förderfläche 2 zu liegen kommt. Das Fischfilet 50 gelangt so zunächst in das Blickfeld der Videokamera 38, welche ein Bild des Filets 50 in den Rechner 40 übermittelt, der eine Auswertung des Bildes nach Abmessung und/oder markanten Merkmalen vornimmt. Vor Eitnritt des Fischfilets 50 in den Arbeitsbereich der Schneideinrichtung 1 werden die an Durchlaßstellung gemäß Fig. 2 befindlichen Messer 22 und 30 mittels der Stelltriebe 29 bzw. 36 in die entsprechend einem vorwählbaren Schneidprogramm ermittelte Schneidposition gebracht. Sodann werden nach diesem Programm die Messer 22 und 30 sowie das axial stationäre, ebenfalls in Durchlaßstellung befindliche Messer 18 in Anschnittstellung gedreht oder in Durchlaßstellung (sh. Fig. 2) belassen. Bei Eintritt des Filets 50 in den Arbeitsbereich der Schneideinrichtung 1 werden die in Schnittstellung befindlichen Messer aktiviert, so daß eine der Vorgabe des gewählten Programmes entsprechende Teilung des Fischfilets 50 in ein Schwanstück 52 ("Tail"), ein den Rückenmuskel 54 umfassendes Stück ("Loin") und ein Mittelstück 53 ("Center piece") erfolgt. nach Austritt des Filets aus dem Arbeitsbereich der Schneideinrichtung 1 werden die Messer in die Durchlaßstellung gemäß Fig. 2 gedreht und in ihre Grundposition gebracht, so daß ein neuer Zyklus beginnen kann. Das Kreismesser 12 läuft von diesem Zyklus unabhängig dauernd um. Jeweils eine Umfangsschneide (20) aufweisend, die durch Entfernen eines Scheibenabschnittes des Kreismessers derweise unterbrochen ist, daß in Ruhestellung die Bogenhöhe des Scheibenabschnittes wenigstens dem größten Dickenmaß des größten zur Verarbeitung kommenden Fischfilets entspricht.

2. Einrichtung nach Anspruch 1, dadurch gekennzeichnet, daß die Schneidorgane (8 bis 11) um eine gemeinsame Achse (6) umlaufend gelagert sind.

3. Einrichtung nach den Ansprüchen 1 oder 2, dadurch gekennzeichnet, daß die Schneidorgane (9 bis 11) je mit einem Drehtrieb (19, 25, 33) zur Beeinflussung der Wirkstellung der Kreismesser (18, 22, 30) und zumindest teilweise mit einem Stelltrieb (29, 36) für die Einstellung der Schneidposition derselben versehen sind.

4. Einrichtung nach Anspruch 3, dadurch gekennzeichnet, daß die Stelltriebe und die Drehtriebe als Schrittmotoren ausgebildet sind.

5. Einrichtung nach einem der Ansprüche 1 bis 4, dadurch gekennzeichnet, daß die Einstellung der Schneidposition der Schneidorgane (10 und 11) über die Gesamtlänge des jeweiligen Filets als Einstellparameter erfolgt, wobei die Filets vorzugsweise unter einheitlicher Ausrichtung ihres Schwanzendes gefördert werden.

6. Einrichtung nach einem der Ansprüche 1 bis 4 , dadurch gekennzeichnet, daß die Einstellung der Schneidposition zumindest des den "Loin"-Schnitt durchführenden Schneidorgans (10) sich an dem Ende des Schnittes orientiert, mit welchem die Pinbones und/oder die Bauchlappen entfernt wurden.

7. Einrichtung nach Anspruch 1 , dadurch gekennzeichnet, daß die Förderfläche (1) der Fördereinrichtung (1) mit Längsnuten (3) versehen ist, in welche die Umfangsschneiden der Kreismesser (12, 18, 22, 30) eintauchen.

8. Einrichtung nach Anspruch 7 , dadurch gekennzeichnet, daß die Einstellung der Schneidposition der Schneidorgane (10 und 11) unter Berücksichtigung der Lage der Längsnuten (3) in der Förderfläche (2) der Fördereinrichtung (1) erfolgt.

## Claims

1. Equipment for the automatic dividing of fish fillets (50), from which the bones and/or belly flaps have preferably been removed, for the purpose of obtaining useful pieces bounded by substantially parallel cutting edges, such as for example so-called "tails" comprising the tail part or a part thereof as well as so-called "loins" comprising the back muscle and extending from the front end to the tail part, wherein the equipment displays a circulatingly driven conveying equipment (1) conveying the fish fillets (50) lying flat and substantially transversely to their longitudinal axis, a cutting equipment (7) arranged above its conveying surface and an electronic camera system for the detection of an image of the fish fillet (50) and for the control of the cutting equipment (7) in dependence on the image, characterised thereby, that the cutting equipment (7) displays cutting organs (8 to 11) in the form of circular blades, which are oriented with their cutting planes parallel to the advancing movement of the conveying equipment (1) and are controllable perpendicularly to the advancing movement of the conveying equipment in respect of their effective setting in cutting setting or rest setting as well as also controllable in respect of the cutting position at least in part in dependence on the size of the fish fillets (50) and/or prominent optical features, wherein the circular blades (18, 22, 30) of the controllable cutting organs (9 to 11) each display a peripheral cutting edge (20), which through removal of a disc segment of the circular blade is interrupted in such a manner that the height of arc of the disc segment in the rest setting corresponds at least to the greatest thickness dimension of the largest fish fillet coming to be processed.

2. Equipment according to claim 1, characterised thereby, that the cutting organs (8 to 11) are borne to rotate about a common axis (6).

3. Equipment according to claim 1 or 2, characterised thereby, that the cutting organs (9 to 11) are each provided with a respective rotary drive (19, 25, 33) for influencing the effective setting of the circular blades (18, 22, 30) and at least partially with a setting drive (29, 36) for the adjustment of the cutting position of the same.

4. Equipment according to claim 3, characterised thereby, that the setting drives and the rotary drives are constructed as stepping motors.

5. Equipment according to one of the claims 1 to 4, characterised thereby, that the adjustment of the cutting position of the cutting organs (10 and 11) takes place over the entire length of the respective fillet as adjusting parameter, wherein the fillets are conveyed preferably with uniform orientation of their tail end.

6. Equipment according to one of the claims 1 to 4, characterised thereby, that the adjustment of the cutting position of at least the cutting organ (10) performing the "loin" cut is oriented at the end of the cut, by which the pin bones and/or the belly flaps were removed.

7. Equipment according to claim 1, characterised thereby, that the conveying surface of the conveying equipment (1) is provided with longitudinal grooves (3) into which the peripheral cutting edges of the circular blades (12, 18, 22, 30) enter.

8. Equipment according to one of the claims 1 to 4, characterised thereby, that the adjustment of the cutting position of the cutting organs (10 and 11) takes place subject to the position of the longitudinal grooves (3) in the conveying surface (2) of the conveying equipment (1) being taken into consideration.

## Revendications

1. Dispositif pour découper automatiquement des filets de poisson (50), dont les arêtes et/ou les lobes ventraux sont de préférence enlevés, dans le but d'obtenir des blocs utilisables limités par des tranchants de découpe sensiblement parallèles, comme par exemple ce que l'on appelle des queues ou "tails" comprenant la partie de queue ou une partie de celle-ci, ainsi que ce que l'on appelle des filets ou "loins", comprenant le muscle dorsal, s'étendant depuis l'extrémité avant jusqu'à la partie de queue, le dispositif comprenant un dispositif d'amenée (1) entraîné de façon continue, amenant les filets de poisson (50) à plat et sensiblement transversalement à leur axe longitudinal, un dispositif de découpe (7) disposé au-dessus de la surface d'amenée du dispositif d'amenée (1), et un dispositif électronique à caméra pour obtenir une image du filet de poisson (50) et régler le dispositif de découpe (7) en fonction de l'image, caractérisée en ce que le dispositif de découpe (7) présente des organes de coupe (8 à 11) en forme de couteaux circulaires dont les plans de coupe sont orientés parallèlement au mouvement d'avance du dispositif d'amenée (1), qui peuvent, en ce qui concerne leur position de travail, être au moins partiellement réglés en position de découpe ou en position de repos en fonction de la dimension des filets de poisson (50) et/ou de particularités optiques marquantes, qui sont aussi réglables, en ce qui concerne leur position de découpe, transversalement au mouvement d'avance du dispositif d'amenée, les couteaux circulaires (18, 22, 30) des organes réglables de découpe (9 à 11) présentant respectivement un tranchant périphérique (20) qui est interrompu en enlevant une partie de disque du couteau circulaire de telle façon que, dans l'état de repos, la hauteur d'arc de la partie de disque corresponde au moins à la plus grande dimension d'épaisseur du plus grand des filets de poisson qui doivent être traités.

2. Dispositif selon la revendication 1, caractérisé en ce que les organes de découpe (8 à 11) sont montés en rotation autour d'un axe commun (6).

3. Dispositif selon les revendications 1 ou 2, caractérisé en ce que les organes de découpe (9 à 11) comportent chacun un entraînement en rotation (19, 25, 33) pour influencer la position de travail des couteaux circulaires (18, 22, 30) et, au moins partiellement, un entraînement de positionnement (29, 36) pour déterminer la position de coupe de ces derniers.

4. Dispositif selon la revendication 3, caractérisé en ce que les entraînements de positionnement et les entraînements en rotation sont constitués par des moteurs pas-à-pas.

5. Dispositif selon l'une des revendications 1 à 4, caractérisé en ce que la détermination de la position de découpe des organes de découpe (10, 11) est effectuée comme paramètre de détermination sur toute la longueur du filet respectif, les filets étant de préférence amenés en orientant une à une leurs extrémités de queues.

6. Dispositif selon l'une des revendications 1 à 4, caractérisé en ce que la détermination de la position de coupe, au moins de l'organe de découpe (10) exécutant la coupe de "loin", s'oriente à l'extrémité de la partie avec laquelle les arêtes et/ou les lobes ventraux ont été enlevés.

7. Dispositif selon la revendication 1, caractérisé en ce que la surface d'amenée (2) du dispositif d'amenée (1) comporte des encoches longitudinales (3) dans lesquelles plongent les tranchants périphériques des couteaux circulaires (12, 18, 22, 30).

8. Dispositif selon la revendication 7, caractérisé en ce que la détermination de la position de découpe des organes de découpe (10 et 11) est effectuée en tenant compte de la situation des rainures longitudinales (3) dans la surface d'amenée (2) du dispositif d'amenée (1).

Fig. 1

Fig. 2

Fig. 3

Fig. 4